Europäisches Patentamt

European Patent Office

Office européen des brevets

(19)

(11) EP 0 799 794 A1

(12) EUROPEAN PATENT APPLICATION

(43) Date of publication:
08.10.1997 Bulletin 1997/41

(51) Int Cl.6: C01B 21/40

(21) Application number: 97400748.6

(22) Date of filing: 01.04.1997

(84) Designated Contracting States:
BE DE ES FR IT NL

(30) Priority: 01.04.1996 US 625999

(71) Applicants:
• L'AIR LIQUIDE, SOCIETE ANONYME POUR
L'ETUDE ET L'EXPLOITATION DES PROCEDES
GEORGES CLAUDE
75321 Paris Cédex 07 (FR)
• Air Liquide America Corporation
Houston, Texas 77056 (US)

(72) Inventors:
• Bhatia, Sandeep
Willowbrook, IL 60514 (US)

• Jackow, François J.
Houston, Texas 77057 (US)
• Vlaming, Rolf
78000 Versailles (FR)
• Koenig, Jacques
78000 Versailles (FR)

(74) Representative: Vesin, Jacques et al
L'AIR LIQUIDE, S.A.,
Service Propriété Industrielle,
75 quai d'Orsay
75321 Paris Cédex 07 (FR)

(54) **Oxygen injection in nitric acid production**

(57) The present invention provides a process for manufacturing nitric acid, which process comprises the steps of reacting ammonia with oxygen in a reactor. This reaction produces nitric oxide, which is then oxidized. The oxidized product is then reacted with water in an absorption column to produce nitric acid. oxygen is injected into the process for use in the oxidation of the nitric oxide. The oxygen is injected downstream of the reactor wherein the reaction of ammonia with oxygen takes place to form the nitric oxide, but upstream of the absorption column in which the oxidized nitric oxide product is reacted with water to produce the nitric acid.

**Description**

## BACKGROUND OF THE INVENTION

The present invention relates to a process for producing nitric acid. More particularly, the present invention relates to a process for producing nitric oxide involving the injection of oxygen downstream of the reactor but upstream of the absorption tower, to thereby provide a process exhibiting increased capacity, improved product acid strength and a reduction in $NO_x$.

Nitric acid is generally manufactured on a commercial level by using a catalytic ammonia oxidation process. The process involves reacting ammonia and oxygen (generally obtained from air) over a catalyst, generally a platinum based gauze, in a reactor to selectively obtain nitric oxide and water:

$$4\,NH_3 + 5O_2 \rightarrow 4NO + 6H_2O$$

Generally, an excess amount of air relative to the stoichiometric amount is provided in order to control the flammability of the mixture and to provide extra oxygen for subsequent oxidation reactions.

The effluent gases from the reactor are then cooled in a series of heat exchangers to oxidize nitric oxide with oxygen to nitrogen dioxide and its dimer:

$$2NO + O_2 = 2NO_2 = N_2O_4$$

The nitrogen dioxide and its dimer are then reacted with water in the absorption column to produce nitric acid.

$$3NO_2 \text{ (or 3/2 } N_2O_4) + H_2O \rightarrow 2HNO_3 + NO$$

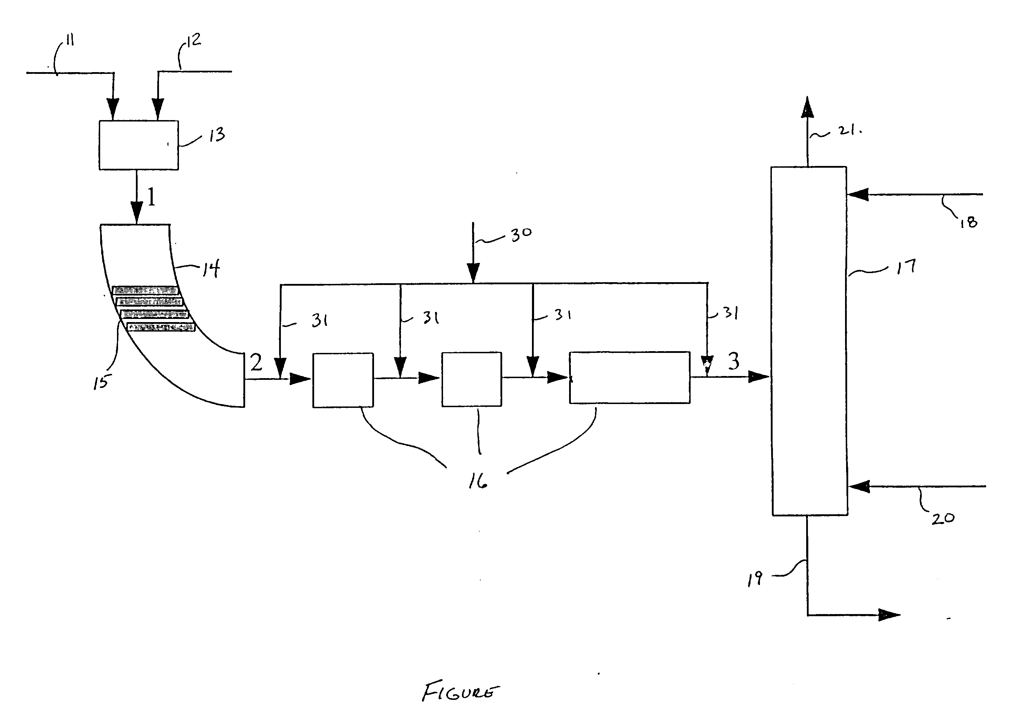

Several flow schemes exist for the catalytic ammonia oxidation process, but the following three zones are characteristic of all the processes. The three zones include a chemical combustion reactor, a chain of heat exchangers between the reactor and the absorption column, and the absorption tower. Such a general scheme is depicted in the Figure of the Drawing.

The industry is constantly attempting to improve the production of nitric acid. Increased capacity, improvements in the product acid strength, as well as reduction of $NO_x$ effluent are all important objectives to rendering commercial processes more viable and acceptable. Steps have been taken in the prior art to primarily improve capacity.

For example, in U.S. Patent Nos. 4,183,906 and 4,235,858, air enriched with oxygen is injected into the absorption tower. This injection of the enriched air allows excess air to be diverted to the front end reactor of the process to thereby increase capacity. It is also known, such as in U.S. Patent Nos. 5,226,291 and 5,360,603, to inject air enriched with oxygen in the stream paths to the reactor. The available excess oxygen allows an increase in ammonia feed, thereby increasing the existing capacity. Generally, in such systems, the temperature of the system and flammability is controlled by water, carbon dioxide, nitrogen dioxide or nitrogen oxide injection into the front end of the reactor and/or into a specialized device of packed bed reactors. Such injection of enriched oxygen to the reactor, however, creates a higher oxygen partial pressure, thereby resulting in an increase in the loss of catalyst by oxidation.

It would therefore be desirable to improve the process of nitric acid production so as to enjoy increased capacity as well as an improved acid product, while also avoiding problems with $NO_x$ emissions.

It is an object of the present invention, therefore, to provide a process for producing nitric acid in which increased capacity is realized for reacting ammonia.

It is another object of the present invention to provide a process for producing nitric acid in which the product acid exhibits increased strength or concentration.

Still another object of the present invention is to provide a process for producing nitric acid in which the $NO_x$ emissions in the tail gas are substantially reduced.

Yet another object of the present invention is to provide a novel nitric acid production process which can achieve the foregoing objectives using conventional equipment.

These and other objects of the present invention will become apparent upon a review of the following specification, the figure of the drawing and the claims appended hereto.

**SUMMARY OF THE INVENTION**

The present invention provides a process for manufacturing nitric acid comprised of the steps of reacting ammonia with oxygen in a reactor. This reaction produces nitric oxide, which is then oxidized. The oxidized product is then reacted with water in an absorption column to produce nitric acid. Oxygen is injected into the process for use in the oxidation of the nitric oxide. Importantly, the oxygen is injected downstream of the reactor wherein the reaction of ammonia with oxygen takes place to form the nitric oxide, but upstream of the absorption column in which the oxidized nitric oxide product is reacted with water to produce the nitric acid.

Among other factors, the present invention is based upon the discovery that when oxygen is injected into the nitric acid production process downstream of the reactor, but upstream of the absorption column, the capacity of the process can be increased without increasing the rate of catalyst loss by oxidation. Furthermore, it has been found that injection of oxygen downstream of the reactor but upstream of the absorption column can also result in a nitric acid product having increased strength. The process also exhibits a substantial reduction in $NO_x$ effluent, making the process more desirable concerning environmental regulations.

**BRIEF DESCRIPTION OF THE DRAWING**

The Figure of the Drawing schematically depicts a system in which the oxygen injection of the present invention is utilized.

**DETAILED DESCRIPTION OF THE PREFERRED EMBODIMENTS**

The nitric acid production process of the present invention contains the three conventional zones of reacting ammonia with oxygen to form nitric oxide, oxidizing the nitric oxide to nitrogen dioxide in a heat exchanging zone, and then reacting the nitrogen dioxide with water in an absorption column to form the nitric acid product. Excess oxygen, however, is supplied through an injection of pure oxygen or an oxygen enriched gas, i.e., generally air containing at least 25% oxygen content, to the reactor effluent. The choice of injection point will be dictated by flow characteristics and process specifications, but can be anywhere downstream of the reactor, but prior to the absorption column. It is through this injection of the oxygen downstream of the reactor but prior to the absorption column that the unique benefits of the present invention are realized.

The injection of oxygen or oxygen-enriched gas, such as air, can be achieved through a multiple or single port injection as noted in the Figure of the Drawing.

In the Figure, ammonia 11 and air 12 are introduced into a static mixer 13. The mixed gas is then passed via 1 into the reactor 14 containing the catalyst gauze 15. In the reactor 14 the ammonia and air react to form nitric oxide. The nitric oxide effluent is passed via 2 through a number of heat exchangers 16. The nitric oxide is oxidized to nitrogen dioxide due to the presence of oxygen during the flow through the heat exchangers.

The oxidized nitric oxide is then passed via 3 from the last heat exchanger, which is a cooler/condenser, into the absorption tower 17. The effluent that is passed to the absorption tower comprises the oxidized nitric oxide (in gas phase) and a weak acid (liquid phase), which weak acid is made due to the presence of moisture in the reaction stream. In certain cases, the oxidized nitric oxide and weak acid are separated before being passed into the absorption tower. Such separation occurs when one wishes to introduce the liquid and gas phases at different trays of the tower. Separation, however, is not always necessary, and the entire effluent can be injected into the tower at the same level.

Water is introduced into the tower 17 via line 18 so that the nitrogen dioxide reacts with the water to form nitric acid. The nitric acid product is then removed via line 19. Bleach air, or additional air, can be introduced into the absorption tower via line 20. The tail gas effluent is taken off of the top of the tower via line 21. This gas generally involves the $NO_x$ gases, the amount of which is substantially reduced in accordance with the present invention. Oxygen can be added via line 30 to the process in the zone downstream from the reactor 14 but upstream from the absorbing tower 17. As shown in the Figure, a number of ports 31 can be used to inject the oxygen into the process. If desired, injection can take place at only a single location. It is most preferred, however, that an injection point be as close to the reactor exit as possible in order to provide a larger volume and a higher residence time for the conversion of nitric oxide into nitrogen dioxide.

The effluent gases from the reactor are not flammable. Nitric oxide undergoes exothermic oxidation releasing energy, but the reaction rate is inversely proportional to temperature, and therefore does not propagate at higher temperatures. This allows for the safe injection of oxygen or an oxygen enriched gas into the process gas in the location of the present invention.

In certain processes, secondary air is mixed with the reactor effluent gases in the heat exchange zone. If secondary air is present, the oxygen can be added to the air to enrich the air, or all of the secondary air can be diverted to the reactor while pure oxygen is injected via line 30.

It is preferred that pure oxygen is injected in accordance with the present process. The use of atmospheric oxygen has two major disadvantages. The nitrogen that is introduced with the atmospheric oxygen generally gives rise to an extra increase in the volumetric flow. Furthermore, the use of air prohibits oxygen from having its maximum impact on its partial pressure. If the partial pressure of oxygen is greater, the rate of NO oxidation is faster, as can be seen from the relationship rate $= kP_{O2}(P_{NO})^2$. The implementation of commercial oxygen would not exhibit the foregoing disadvantages, and would allow for maximum impact of oxygen partial pressure.

The process of the present invention provides an improved multi-step oxidation process for the production of nitric acid whereby improvements are realized with regard to an increase in the capacity of production, improvement in the strength of the acid product (weight percent of $HNO_3$) and a reduction in the $NO_x$ emissions. Such results are achieved through the injection of pure oxygen or an oxygen enriched atmosphere into the processed gas downstream of the reactor, but upstream of the absorption tower. The amount of oxygen injected can vary, and will depend upon the increase in capacity of the system (the excess ammonia processed as demonstrated in Exhibit 1), and the desired increase in acid strength.

The injection of the oxygen in the heat exchange zone of the present process permits one to alter the ammonia/ air ratio in order to increase the production capacity by allowing for higher flow rates of ammonia to be processed. The higher flow rate of ammonia, however, does raise two concerns. The first is the temperature of the catalyst gauze and the second is the flammability of the inlet gas use mixture. The temperature of the gauze is preferably maintained within a particular range to optimize its activity, selectivity, and its operational life. The temperature of the reaction, and of the catalyst gauze, can be controlled, for example, by controlling the temperature of the air feed and the ammonia feed. A cooler air and ammonia feed will help to keep the temperature of the gauge cooler.

Both of the above concerns can be addressed by injecting an inert fluid into the feed streams upstream of the mixer 13, as shown in the Figure. Such a fluid should have a high heat capacity for temperature moderation such as $H_2O$, $CO_2$, but should not be a gas that supports combustion, such as NO. For example, the reactor temperature can be maintained between 700-712°C by feeding atomized $H_2O$ at elevated pressures. The water is fed through a small orifice under pressure preferably equal to or greater than the pressure of the air stream. $H_2O$ is vaporized as steam and acts as a heat sink because of its high heat capacity and heated vaporization. Furthermore, addition of water increases the lower limit of flammability for ammonia allowing for the safe processing of higher feed flow of ammonia. Also, since water is an ingredient of the overall reaction scheme, a water balance can be maintained and optimized.

Another advantage of the present process is that because of increased ammonia flow rate and inert injection, a lower partial pressure of oxygen is realized. This lower partial pressure of oxygen has a beneficial effect on the platinum catalyst, resulting in a reduction in the rate of loss of catalyst by oxidation.

The invention will be illustrated in greater detail by the following specific examples. It is understood that these examples are given by way of illustration and are not meant to limit the disclosure of the claims to follow. All percentages in the examples, and elsewhere in the specification, are by weight unless otherwise specified.

Example 1

Using a computer simulation, a calculation for various runs was made involving the reaction of ammonia and air in a reactor containing a platinum based catalyst to produce nitric acid. The reaction scheme utilized was that substantially depicted in the Figure. Three separate runs were considered, with Case I being the conventional, control process, and with Case II and Case III involving oxygen injection downstream from the reactor, but before the absorber. The results of the runs are tabulated in Table 1.

TABLE 1

| | CASE I - CONTROL | | | CASE II | | | CASE III | | |
|---|---|---|---|---|---|---|---|---|---|
| STREAM | 1 | 2 | 3 | 1 | 2 | 3 | 1 | 2 | 3 |
| T° (C) | 152 | 888 | 43 | 110 | 888 | 43 | 110 | 888 | 43 |
| P(Bar) | 9 | <9 | <9 | 9 | <9 | <9 | 9 | <9 | <9 |
| Mole Fraction (%) | | | | | | | | | |
| H₂0 | 1.4 | 16.9 | 2.6 | 4.0 | 20.4 | 3.5 | 4.0 | 20.4 | 3.5 |
| N₂ | 69.4 | 68.0 | 88.8 | 66.8 | 65.4 | 87.1 | 66.8 | 65.4 | 86.2 |
| O₂ | 18.6 | 5.5 | 0.9 | 17.9 | 4.1 | 1.2 | 17.9 | 4.1 | 2.3 |
| NH₃ | 10.6 | 0.0 | 0.0 | 11.3 | 0.0 | 0.0 | 11.3 | 0.0 | 0.0 |
| NO | 0.0 | 9.6 | 1.4 | 0.0 | 10.1 | 1.4 | 0.0 | 10.1 | 1.0 |
| NO₂ | 0.0 | 0.0 | 6.3 | 0.0 | 0.0 | 6.8 | 0.0 | 0.0 | 7.0 |
| Oxidation State (%) | | 86 | | | 86 | | | | 90 |

The ammonia feed flow was increased by 10% from the base case (Case I) to the oxygen injection cases (Case II and Case III), without changing the reactor temperature and while remaining outside the flammability domain of the gaseous mixture. The higher flow of ammonia enabled the capacity of the plant to be expanded by roughly 10%.

In Case II, 4.2 ton $O_2$/ton excess ammonia (that ammonia in excess of the amount used in control Case I) was injected downstream of the reactor. The oxidation state and the mole fraction of NO remained unchanged from Case I, whereas the capacity increased by 10%.

Case III demonstrates the results of providing additional oxygen (7 ton $O_2$/ton ammonia). Additional oxygen is provided to increase the oxidation of NO into $NO_2$, thereby increasing the oxidation state and reducing the mole fraction of NO in the gases entering the absorber. The oxidation state is defined as:

$$([NO_2]+2*[N_2O_4])/([NO]+[NO_2]+2*([N_2O_4])$$

where, [x] represents the concentration in moles for x=NO,$NO_2$, or $N_2O_4$.

The oxidation state influences the strength of the product acid acid strength. In the examples above, the oxidation state increased from 86% to 90%. A direct correlation exists between the strength of the acid in equilibrium with $NO_x$ gases and the oxidation state of the gaseous mixture. An increase in oxidation state can therefore lead to the formation of higher acid strength. Furthermore, the lowering of NO partial pressure by 40% corresponds to a substantial decrease in the $NO_x$ emissions (depending on the efficiency and volume of the absorber tower).

Example 2

Provided is a computer simulated comparison of runs involving the production of nitric acid pursuant to the reaction scheme shown in the Figure. Results are given for a reference situation and a case in which the ammonia feed has been increased by 17.8% with oxygen enrichment at the cooler condenser respectively. A third case will be discussed in which only the ammonia feed has been increased by 17.8%. This is a hypothetical situation however, since there is not enough oxygen in such a situation to oxidize all the NO in order to produce the nitric acid. It allows, however, one to evaluate the influence of the oxygen in the cooler condenser.

In general, the following operating parameters were employed, unless stated otherwise:

| **Flow rates** | Primary air | 49244 | Nm3/hr |
|---|---|---|---|
| | Secondary air | 3405 | Nm3/hr |

(continued)

| Reactor | Operating pressure | 9.3 | bar abs |
|---|---|---|---|
| | Operating temperature | 881 | °C |
| | NH3 conversion selectivity | 95 | % into NO |
| | | | |
| Cooler condenser | Steel side | nitrous gas | |
| | Tube side | refrigerating water | |
| | Flow type | counter current | |
| | Operating pressure | 8.6 | bar abs. |
| | Pressure drop | 0.3 | bar |
| | Tube length | 10.0 | m |
| | Shell diameter | 1.30 | m |
| | Heat transfer coefficient | 400 | Kcal/hr/m 2/K |
| | Coolant temperature | 30 | °C |
| | | | |
| Absorption column | Operating pressure | 8.3 | bar abs |
| | Pressure drop | 360 | mbar |
| | Tail gas temperature 35 | °C | |
| | Nitric acid temperature | 52 | °C |
| | Number of plates | 39 | - |
| | Feed tray | 6 | - |
| | Pressure drop | 0.36 | bar |
| | Column diameter | 3.0 | m |
| | Tray spacing | 50 | cm |
| | Acid strength | 52 | w% |

The flow rate values for the reference case are:

| Ammonia flow rate | 94.2 | tpd | Air composition: | nitrogen | 77.8 | mole % |
|---|---|---|---|---|---|---|
| Primary air flow rate | 49245 | Nm$^3$/hr | | oxygen | 20.7 | mole % |
| Secondary air flow rate | 3405 | Nm$^3$/hr | | water | 1.5 | mole % |

This corresponds to a 9.5 mole% ammonia in the reactor feed. The temperature of the air is 250°C and the ammonia vapor is heated to 120°C.

For the oxygen injection case when the ammonia flow rate has been increased to 110.9 tpd, the following particulars were observed:

Increased ammonia feed flow, without any oxygen enrichment

| NH3 Percentage in feed | 11.0 | mole % |
|---|---|---|
| Primary air temperature | 130 | °C |

Increased ammonia feed flow, oxygen injection at condenser

| NH3 Percentage in feed | 11.0 | mole % |
|---|---|---|
| Primary air temperature | 163 | °C |
| Oxygen injection | 1800 | Nm$^3$/hr |

The temperature of the combustion reactor was kept constant at 881°C by adapting the primary air temperature as can be seen above. The performance of the cooler condenser for the different cases is highlighted in the following tables. Attention should be paid especially to the percentage of NO oxidized, the residual amount of oxygen in the process gas and the amount of acid produced.

**Reference Case**

| Components | Cooler Feed | Process Gas | Weak Acid |
|---|---|---|---|
| $H_2O$ | 379.110 | 6.343 | 334.341 |
| NO | 57.571 | 19.655 | 0.000 |
| $NO_2$ | 160.359 | 56.670 | 0.000 |
| $N_2O_4$ | 0.646 | 33.022 | 0.000 |
| $N_2$ | 1716.070 | 1716.070 | 0.000 |
| $O_2$ | 91.553 | 53.383 | 0.000 |
| $NHO_3$ | 0.000 | 0.000 | 76.852 |
| $NH_3$ | 1.154 | 1.154 | 0.000 |
| | | | |
| DEBIT (Kmole/hr) | 2405.310 | 1885.140 | 411.193 |
| TEMPERATURE (C) | 150.0 | 38.8 | 38.8 |
| PRESSURE (Bar) | 8.6 | 8.3 | 8.3 |
| % NO Oxidized | 0.737 | 0.862 | |

**Increased $NH_3$ feed flow with oxygen enrichment at the cooler condenser**

| Components | Cooler Feed | Process Gas | Weak Acid |
|---|---|---|---|
| $H_2O$ | 440.520 | 7.304 | 389.158 |
| NO | 95.326 | 21.831 | 0.000 |
| $NO_2$ | 161.505 | 68.852 | 0.000 |
| $N_2O_4$ | 0.642 | 39.658 | 0.000 |
| $N_2$ | 1717.090 | 1716.070 | 0.000 |
| $O_2$ | 117.473 | 58.696 | 0.000 |
| $NHO_3$ | 0.000 | 0.000 | 88.117 |
| $NH_3$ | 0.000 | 0.000 | 0.000 |
| | | | |
| DEBIT (Kmole/hr) | 2532.560 | 1913.430 | 477.275 |
| TEMPERATURE (C) | 146.4 | 41.5 | 41.5 |
| PRESSURE (Bar) | 8.6 | 8.3 | 8.3 |
| % NO Oxidized | 0.631 | 0.872 | |

**Increased $NH_3$ feed flow without any oxygen injection**

| Components | Cooler Feed | Process Gas | Weak Acid |
|---|---|---|---|
| $H_2O$ | 440.520 | 6.468 | 394.198 |
| NO | 95.326 | 59.820 | 0.000 |
| $NO_2$ | 161.505 | 59.914 | 0.000 |
| $N_2O_4$ | 0.642 | 31.837 | 0.000 |
| $N_2$ | 1717.090 | 1717.090 | 0.000 |
| $O_2$ | 40.833 | 3.153 | 0.000 |
| $NHO_3$ | 0.000 | 0.000 | 79.707 |
| $NH_3$ | 0.000 | 0.000 | 0.000 |

(continued)

| Components | Cooler Feed | Process Gas | Weak Acid |
|---|---|---|---|
| DEBIT (Kmole/hr) | 2455.920 | 1873.290 | 473.905 |
| TEMPERATURE (C) | 150.0 | 38.5 | 38.5 |
| PRESSURE (Bar) | 8.6 | 8.3 | 8.3 |
| % NO Oxidized | 0.631 | 0.665 | |

A critical evaluation of the foregoing data illustrates that the cooler condenser is still capable of yielding a temperature close to the original outlet temperature of 38.8°C.

Below, the results for the absorption column are given in order to illustrate that the final nitric acid production is indeed improved. The case concerning the increased ammonia feed flow without oxygen enrichment is obviously absent, due to the lack of the necessary oxygen. Attention should be paid to the nitric acid production and the tail gas composition.

**Reference Case**

| Components | Cooler Feed | Process Gas | Weak Acid |
|---|---|---|---|
| $H_2O$ | 8.623 | 13.083 | 698.521 |
| NO | 19.655 | 2.473 | 0.000 |

**Reference Case**

| Components | Cooler Feed | Process Gas | Weak Acid |
|---|---|---|---|
| $NO_2$ | 56.670 | 0.409 | 0.000 |
| $N_2O_4$ | 33.022 | 0.002 | 0.000 |
| $N_2$ | 1834.320 | 1834.320 | 0.000 |
| $O_2$ | 84.847 | 41.385 | 0.000 |
| $NHO_3$ | 0.000 | 0.290 | 216.336 |
| $NH_3$ | 0.000 | 0.000 | 0.000 |
| | | | |
| DEBIT (Kmole/hr) | 2037.140 | 1891.970 | 914.857 |
| TEMPERATURE (C) | 47.6 | 35.0 | 50.0 |
| PRESSURE (Bar) | 8.3 | 7.94 | 8.30 |
| VAPOR FRACTION | 1 | 1.000 | 0.000 |
| $NO_x$ IN ABSORBER FEED (PPMV) | 69887.23 | | |
| NO-OXIDATION AT INLET (%) | 86.19 | | |
| NOX IN TAIL GAS (PPMV) | 1525.4 | | |
| HNO3 PRODUCTION (tpd) | 327.1 | | |

**Increased $NH_3$ feed flow with oxygen injection at cooler condenser:**

| Components | Feed column | Tail gas | Nitric acid |
|---|---|---|---|
| $H_2O$ | 9.584 | 13.073 | 823.381 |
| NO | 21.831 | 2.633 | 0.000 |
| $NO_2$ | 68.852 | 0.4342 | 0.000 |
| $N_2O_4$ | 39.658 | 0.002 | 0.000 |
| $N_2$ | 1835.350 | 1835.350 | 0.000 |

(continued)

| Components | Feed column | Tail gas | Nitric acid |
|---|---|---|---|
| $O_2$ | 90.160 | 38.830 | 0.000 |
| $NHO_3$ | 0.000 | 0.294 | 255.043 |
| $NH_3$ | 0.000 | 0.000 | 0.000 |
| | | | |
| DEBIT (Kmole/hr) | 2065.430 | 1890.620 | 1078.420 |
| TEMPERATURE (C) | 47.8 | 35.0 | 50.0 |
| PRESSURE (Bar) | 8.3 | 7.94 | 8.30 |
| VAPOR FRACTION | 1.000 | 1.000 | 0.000 |
| NOx IN ABSORBER FEED (PPMV) | 82306.19 | | |
| NO-OXIDATION AT INLET (%) | 87.16 | | |
| NOX IN TAIL GAS (PPMV) | 1624.81 | | |
| HNO3 PRODUCTION (tpd) | 385.6 | | |

The nitric acid production with oxygen injection increased to 385.6 tons per day which corresponds with a 17.8% production increase.

Example 3

The reference case of Example 2 has been used to show by computer simulation the influence that an oxygen injection at the cooler condenser has on the $NO_x$-emission. The obtained emission reduction is a function of the amount of oxygen that will be injected, although the last ton of oxygen will be less efficient in comparison with the first. In this example 7.68 metric tons of oxygen are injected per day.

The tables show the performance of the absorption column for the reference case and for the case in which the oxygen enrichment has been applied. The results show that the percentage of NO oxidized in the column's feed has been increased due to the oxygen injected in the cooler condenser. The resulting reduction in $NO_x$ emission is 13.7%. The nitric acid production on the other hand has been increased corresponding to the reduction in the $NO_x$ emissions.

In this example, the amount of absorption water has been varied in order to maintain a 52 w% nitric acid production.

**Reference case:**

| Components | feed column | Tail gas | Nitric acid |
|---|---|---|---|
| $H_2O$ | 8.623 | 13.083 | 698.521 |
| NO | 19.655 | 2.473 | 0.000 |
| $NO_2$ | 56.670 | 0.409 | 0.000 |
| $N_2O_4$ | 33.022 | 0.002 | 0.000 |
| $N_2$ | 1834.320 | 1834.320 | 0.000 |
| $O_2$ | 84.847 | 41.385 | 0.000 |
| $NHO_3$ | 0.000 | 0.290 | 216.336 |
| $NH_3$ | 0.000 | 0.000 | 0.000 |
| | | | |
| DEBIT (Kmole/hr) | 2037.140 | 1891.970 | 914.857 |
| TEMPERATURE (C) | 47.6 | 35.0 | 50.0 |
| PRESSURE (Bar) | 8.3 | 7.94 | 8.30 |
| VAPOR FRACTION | 1 | 1.000 | 0.000 |

**Results with oxygen enrichment at cooler:**

| Components | feed column | Tail gas | Nitric acid |
|---|---|---|---|
| $H_2O$ | 8.64405 | 13.148 | 699.759 |
| NO | 18.265 | 2.126 | 0.000 |
| $NO_2$ | 57.180 | 0.374 | 0.000 |
| $N_2O_4$ | 33.354 | 0.002 | 0.000 |
| $N_2$ | 1834.320 | 1834.320 | 0.000 |
| $O_2$ | 94.097 | 51.115 | 0.000 |
| $NHO_3$ | 0.000 | 0.292 | 216.719 |
| $NH_3$ | 0.000 | 0.000 | 0.000 |
| | | | |
| DEBIT (Kmole/hr) | 2045.87 | 1901.380 | 916.478 |
| TEMPERATURE (C) | 47.643 | 35.0 | 50.0 |
| PRESSURE (Bar) | 8.3 | 7.94 | 8.30 |
| VAPOR FRACTION | 1 | 1.000 | 0.000 |
| NOx IN ABSORBER FEED (PPMV) | | 69483.29 | |
| | | | |
| NO-OXIDATION AT INLET (%) | | 87.15 | |
| NOx IN TAIL GAS (PPMV) | | 1316.35 | |
| HNO3 PRODUCTION (tpd) | | 327.7 | |

While the invention has been described with preferred embodiments, it is to be understood that variations and modifications may be resorted to as will be apparent to those skilled in the art. Such variations and modifications are to be considered within the purview and the scope of the claims appended hereto.

**Claims**

1. A process for producing nitric acid which comprises :

   (i) reacting ammonia with oxygen to form nitric oxide,
   (ii) oxidizing the nitric oxide to nitrogen dioxide and its dimer, and
   (iii) reacting the nitrogen dioxide and its dimer with water to form nitric acid,

   with oxygen being introduced into the process after step (i) but before step (iii).

2. The process of claim 1, wherein the oxygen is introduced into the process in several locations.

3. The process of claim 1, wherein the oxygen is introduced into the process at a single location.

4. The process according to one of claims 1 to 3, wherein the oxygen is introduced into the process by introducing the oxygen into the effluent gas created by the reaction in step (i) as the effluent gas exits the reactor.

5. The process according to anyone of claims 1 to 4, wherein the oxygen introduced into the process is substantially pure oxygen.

6. The process according to anyone of claims 1 to 4, wherein the oxygen introduced into the process is introduced as an oxygen enriched gas.

7. The process of claim 6, wherein the oxygen enriched gas contains at least 25% by weight oxygen.

8. The process of claim 6, wherein the oxygen enriched gas is oxygen enriched air.

9. The process according to one of claims 1 to 8, wheirein the amount of ammonia in the reaction environment of step (i) ranges from about 8.0 to 20.0 mol percent.

10. The process according to one of claims 1 to 9, wherein the amount of ammonia in the reaction environment of step (i) is in the range of from about 9 to 15 mol percent.

11. The process according to one of claims 1 to 10, wherein the amount of ammonia in the reaction environment of step (i) is in the range of from about 9 to 12 mol percent.

12. A process for producing nitric acid which comprises :

(i) reacting ammonia with oxygen to form nitric acid with the amount of ammonia in the reaction environment being at least 11.0 mol percent,
(ii) oxidizing the nitric oxide to nitrogen dioxide and its dimer, and
(iii) reacting the nitrogen dioxide and its dimer with water to form nitric acid,

with pure oxygen being introduced into the process after step (i), but before step (iii).

13. The process of claim 12, wherein the oxygen introduced into the process is introduced into the effluent gas created by the reaction in step (i) as the effluent gas leaves the reaction zone.

14. A system for producing nitric acid which comprises :

(i) a reaction zone for reacting ammonia with oxygen to form nitric oxyde,
(ii) a heat exchange zone for oxidizing the nitric oxide to nitrogen dioxide and its dimer, and
(iii) an absorption column for reacting the nitrogen dioxide and its dimer with water to form nitric acid,

with means for introducing oxygen into the system downstream of the reaction zone but upstream of the absorption column.

15. The system of claim 14, wherein the means for introducing the oxygen into the system exist at several locations.

FIGURE

**European Patent Office**

## EUROPEAN SEARCH REPORT

Application Number

EP 97 40 0748

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 004 746 A (BRITISH OXYGEN CO LTD) 17 October 1979 <br> * page 2, line 4-10 * | 1-8 | C01B21/40 |
| D | & US 4 235 858 A | | |
| | --- | | |
| A | EP 0 384 565 A (BECO ENGINEERING COMPANY) 29 August 1990 <br> * page 4, line 32 - line 58 * | 1 | |
| | --- | | |
| A | FR 2 369 210 A (ROBICHON PATRICE) 26 May 1978 <br> * page 2, line 30 - page 3, line 10; claim 1 * | 1 | |
| | --- | | |
| A | US 3 927 182 A (POWELL JAMES BASIL) 16 December 1975 <br> * claim 1 * | 1 | |
| | ----- | | |

**TECHNICAL FIELDS SEARCHED** (Int.Cl.6)

C01B

The present search report has been drawn up for all claims

| Place of search | Date of completion of the search | Examiner |
|---|---|---|
| BERLIN | 4 June 1997 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)